# EUROPEAN PATENT SPECIFICATION

(11) **EP 1 743 813 B1**
(45) Date of publication and mention of the grant of the patent: **25.03.2009**
(21) Application number: 06012568.9
(22) Date of filing: 19.06.2006
(51) Int. Cl.: B60R 22/18

(54) **Seatbelt apparatus**
Sicherheitsgurtvorrichtung
Système de ceinture de sécurité

(30) Priority: 14.07.2005 JP 2005205078
(43) Date of publication of application: 17.01.2007
(73) Proprietor: TAKATA CORPORATION, Minato-ku, Tokyo 106-8510 (JP)
(72) Inventor: Gomi, Seiji, Tokyo 106-8510 (JP); Lee, Byoung Hoon, Tokyo 106-8510 (JP)
(74) Representative: Banzer, Hans-Jörg

(56) References cited:
- FR-A- 2 526 381
- US-A- 4 194 786
- ANONYMOUS: "Tension sensing assembly" RESEARCH DISCLOSURE, MASON PUBLICATIONS, HAMPSHIRE, GB, vol. 474, no. 49, October 2003 (2003-10), XP007132929 ISSN: 0374-4353

## Description

The present invention relates to a seatbelt apparatus for a vehicle such as a motor vehicle.

In the related art, a seatbelt apparatus is installed in a vehicle such as a motor vehicle for ensuring safety of a passenger. The seatbelt apparatus is configured in such a manner that a tongue which is provided at an end or a bent end of a seatbelt (webbing) put on a shoulder and a lumbar region of the passenger is fixed to a buckle device on the floor side of a vehicle body, whereby the passenger is held in a constrained state and protected by the seatbelt (for example, see Japanese Unexamined Patent Application Publication No.2002-321593).

US 4,915,451 describes
A seatbelt apparatus comprising:
a seatbelt with a tongue;
a buckle device having a buckle section to be engaged with the tongue;
a wire folded into two parts so as to form a loop, for fixing the buckle device to a vehicle body side;
a protective cover provided on an outer peripheral side of the wire so as to store the wire; and
a holder (116) located on the inner peripheral side of the protective cover and fitted on the outer periphery of both parts of the looped wire .

As an example of the seatbelt apparatus, a seatbelt apparatus is known which is provided with a buckle device of a wire strap type. The wire strap type buckle device includes a buckle section in a flat enclosure with an opening at one end for inserting the tongue of the seatbelt. The buckle section includes latch members that engage the inserted tongue and are supported on both sides of a base in the shape of a U-bent frame so as to be capable of rotating. The latch members are provided with two switches on a hall side and a substrate side for detecting that the seatbelt is worn by sensing the engagement with the tongue.

In the enclosure, both ends of a wire bent into two parts so as to form a loop are rotatably mounted, and a looped portion of the wire on the bent end is rotatably supported by a fixed member on the floor side of the vehicle body so that the enclosure is supported on the floor side of the vehicle body so as to be capable of pivoting. A protective cover of an accordion shape is mounted between the enclosure and the fixed member for storing a wire and signal cables connected to the switches.

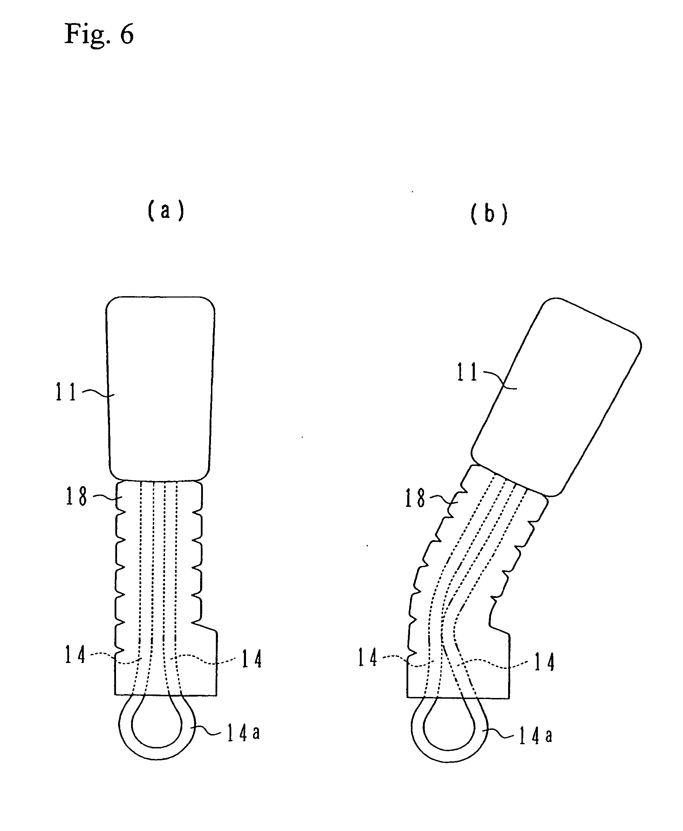

When the passenger wears the seatbelt by fixing the tongue of the seatbelt to the buckle device, an upper end of the buckle device is pulled in the fore-and-aft direction by a tensile force applied from the seatbelt, and hence the protective cover and the wire in the protective cover are bent in the fore-and-aft direction of the vehicle. At this time, as shown in Fig. 6(a), which are the basis for the two part form of claim 1, and Fig. 6(b), for example, a part of a protective cover 18 is significantly bent at a acute angle and a bending stress concentrates thereto. Therefore, a wire 14 may be significantly bent or parts of the wire 14 may be crossed with each other at a portion near the corresponding area of the protective cover 18.

It is an object of the present invention to provide a seatbelt apparatus that can prevent the wire from being bent excessively or parts of the wire from crossing with each other when the seatbelt is worn.

According to the present invention, this object is achieved by a seatbelt apparatus according to claim 1. The dependent claims define preferred or advantageous embodiments.

In the arrangement according to claim 1, even though an upper end of the buckle device is pulled in the fore-and-aft direction, and the protective cover and the wire in the protective cover are bent in the fore-and-aft direction when the seatbelt is worn, the wire can resist with its rigidity because the holder is fitted on the outer periphery of the wire on the inner peripheral side of the protective cover. Consequently, the protective cover and the wire are prevented from being significantly bent at an acute angle, and concentration of a bending stress on the wire can be reduced, whereby excessive bending of the wire or crossing of the parts of the wire can be prevented.

Preferably, the wire is fixed at both ends thereof in an enclosure of the buckle device and the bent end thereof is pivotably supported by a fixed member on a side of a seat, and the protective cover is formed into an accordion shape that can support the enclosure on the side of the seat so as to be capable of swinging freely.

Even when the upper end of the buckle device is pulled in the fore-and-aft direction and the accordion-shaped protective cover which can swing freely and the wire which is fixed at both ends thereof to the enclosure of the buckle device are bent in the fore-and-aft direction, concentration of a stress to one part of the wire can be avoided by the holder.

Preferably, the holder is fitted on the wire at a portion of the protective cover in the vicinity of a constricted portion of the accordion shape which is located on the fixed member side.

In this arrangement, bending of the wire at the constricted portion on the fixed member side which is bent to the largest extent can reliably be alleviated and hence excessive bending of the wire or the like can reliably be prevented.

Further preferably, a tape is wound around the holder and the wire so as to ride across the holder and the wire to fix the holder to the wire.

In this arrangement, the holder and the wire can be fixed in a simple method.

According to the present invention, significant bending of the protective cover and the wire in the protective cover at an acute angle is prevented, so that excessive bending of the wire or crossing of the parts of the wire due to concentration of the bending stress can be prevented.

Referring now to the drawings, an embodiment of the present invention will be described.
Fig. 1 is a perspective view of a seatbelt apparatus according to an embodiment of the present invention.
Fig. 2 is a partly broken front view of a principal portion of a buckle device shown in Fig. 1.
Fig. 3 is a side cross-sectional view of the principal portion of the buckle device shown in Fig. 1.
Fig. 4 is a cross-sectional view taken along the line A-A in Fig. 2.
Fig. 5 is an explanatory drawing showing an operation of the buckle device shown in Fig. 1.
Fig. 6 is an explanatory drawing showing a drawback of the buckle device in the related art, in which (a) shows a state of not being used, and (b) shows a state of being used.

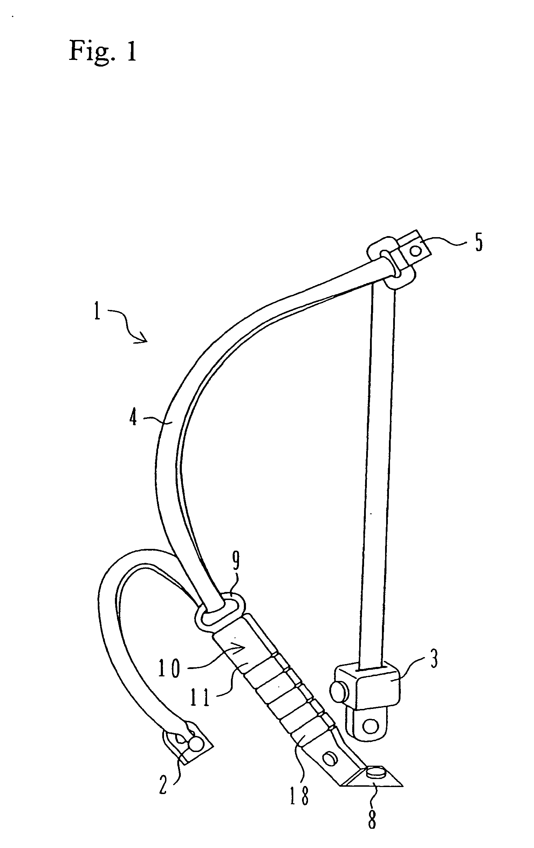

Fig. 1 is a perspective view of a seatbelt apparatus according to this embodiment. This drawing shows the seatbelt apparatus for a driver's seat of a vehicle in a state in which it is being used.

As shown in Fig. 1, a seatbelt apparatus 1 includes a seatbelt (webbing) 4 which is supported at one end by an anchor 2 fixed to a position near a floor surface of a vehicle body on a door side and supported at the other end by a retracting device 3 fixed to a position near the floor surface of the vehicle body so as to be capable of being retracted for constraining a passenger. A midsection of the seatbelt 4 is passed through a shoulder anchor 5 rotatably held at a position on a center pillar (not shown) of the vehicle body on an upper side of the vehicle body. When a tongue 9 attached to the seatbelt 4 at a position below the anchor 5 is fixed to a buckle device 10 connected to a fixed side member 8 provided on a side of a seat (not shown) opposite from the anchor 2, the seatbelt 1 is fixed to the floor side of the vehicle body while being put on a shoulder and a lumbar region of the passenger, so that the passenger is constrained. The fixed side member 8 may be provided on a floor side of the vehicle body.

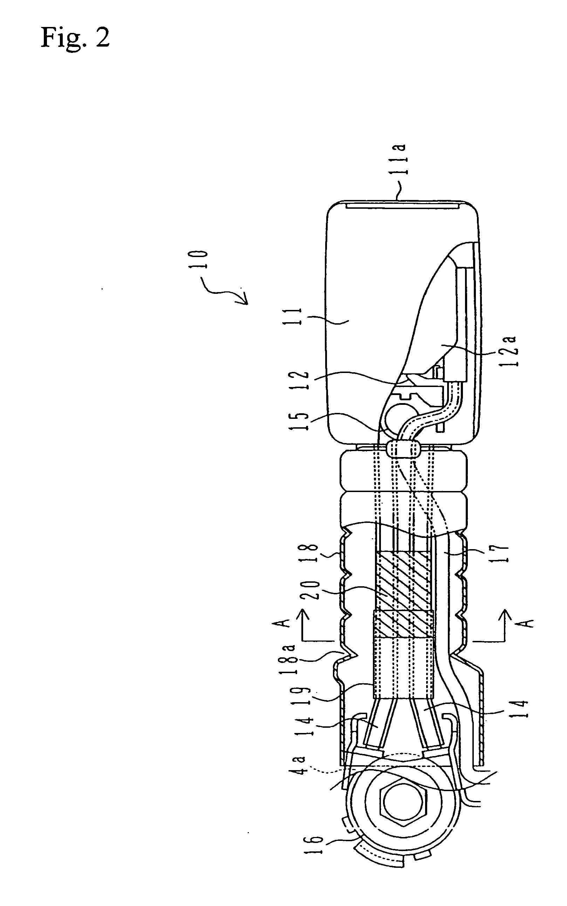

Fig. 2 is a partly broken front view of a principal portion of the buckle device 10.

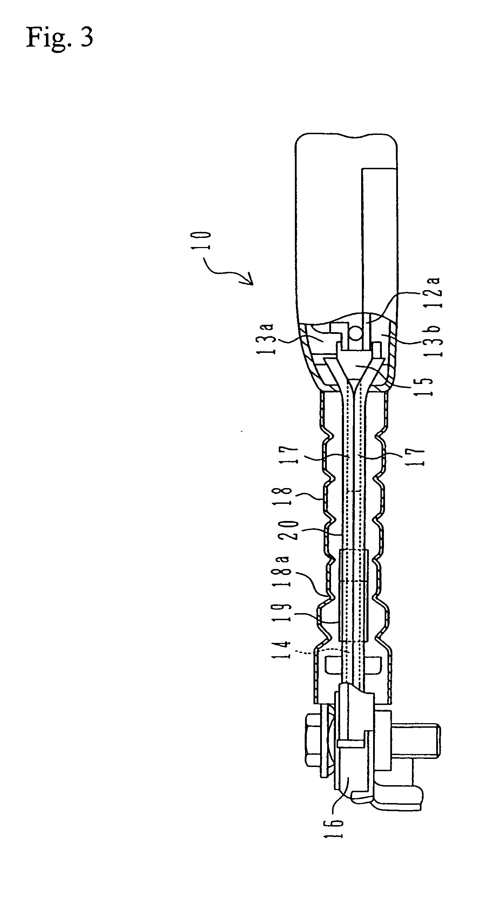

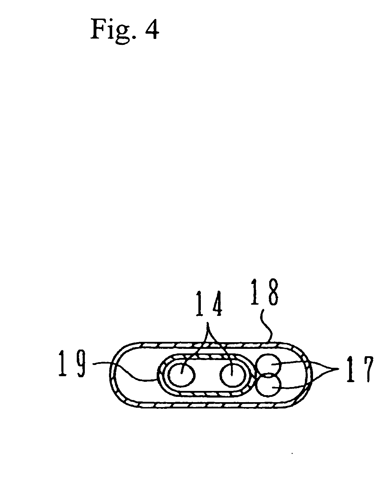

In Fig. 2 to Fig. 4, the buckle device 10 is provided with a buckle section 12 in a flat enclosure 11 opened at one end for inserting the tongue 9 (not shown, see Fig. 1). The buckle section 12 includes latch members that engage the tongue inserted into the enclosure 11 from an opening 11a at one end and are supported on both sides of a base 12a in the shape of a U-bent frame so as to be capable of rotating. The latch members are provided with two switches 13a, 13b on a hall side and a substrate side for detecting that the seatbelt is worn by sensing the engagement with the tongue.

A wire 14 folded into two parts so as to form a loop is pivotably secured at both ends thereof in the enclosure 11 via a wheel 15, and is pivotably supported by the fixed member 8 on the side of the seat via a wheel 16 on which a looped portion 14a at the bent end of the wire 14 is wound around, whereby the enclosure 11 is supported so as to be capable of swinging freely. A protective cover 18 of an accordion shape is mounted between the enclosure 11 and the fixed member 8 for storing the wire 14 and signal cables 17 connected to the switches 13a, 13b.

When the passenger wears the seatbelt by fixing the tongue of the seatbelt to the buckle device 10, the upper end of the buckle device 10 is pulled in the fore-and-aft direction of the vehicle by the seatbelt, and hence the protective cover 18 and the wire 14 in the protective cover 18 are bent in the fore-and-aft direction of the vehicle. At this time, when the protective cover and the wire are bent significantly at an acute angle at a part of the protective cover 18 (for example, at a portion in the vicinity of a constricted portion 18a of the lowermost accordion which is the nearest to the fixed member), a bending stress is concentrated thereto, and consequently, the wire 14 may be bent significantly, or parts of the wire 14 may be crossed each other.

Therefore, in this embodiment, a resilient member having a rigidity such as aluminum or resin, in this example, a holder 19 formed of aluminum, is fitted on the wire 14 in a part (in this example, the portion in the vicinity of the constricted portion 18a of the lowermost accordion) of the protective cover 18. An adhesive tape 20 is wound around the holder 19 so as to ride across the wire 14, so that the holder 19 is fixed to the wire 14. Accordingly, the holder 19 and the wire 14 can be fixed reliably in a simple method.

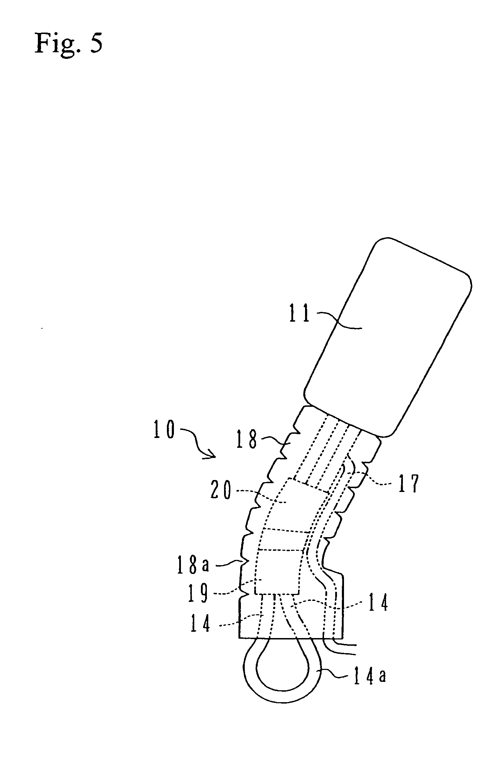

In this arrangement, because the holder 19 can provide rigidity to the wire 14 in the above-described part of the protective cover 18, as shown in Fig. 5, the protective cover 18 and the wire 14 can be prevented from being bent significantly at an acute angle in the vicinity of the above-described part of the protective cover 18, and hence concentration of a bending stress is reduced, whereby the wire 14 is prevented from being bent excessively or the parts of the wire are prevented from being crossed with each other.

## Claims

1. A seatbelt apparatus comprising:
a seatbelt (4) with a tongue (9);
a buckle device (10) having a buckle section (12) to be engaged with the tongue (9) and a switch (13a, 13b) for sensing engagement between the buckle section (12) and the tongue (9);
a wire (14) folded into two parts so as to form a loop, for fixing the buckle device (10) to a vehicle body side;
a protective cover (18) provided on an outer peripheral side of the wire (14) so as to store the wire (14); and
a signal cable (17) connected to the switch (13a, 13b) and extending on an inner peripheral side of the protective cover (18);
**characterized in that**
a holder (19) is located on the inner peripheral side of the protective cover (18) and fitted on the outer periphery of both parts of the looped wire (14) so as to prevent both parts of the wire (14) from being crossed with each other.

2. The seatbelt apparatus according to Claim 1, wherein the wire (14) is fixed at both ends in an enclosure (11) of the buckle device (10), and a bent end (14a) thereof is pivotably supported by a fixed member (8) on a side of a seat, and the protective cover (18) is formed into an accordion shape that can support the enclosure (11) on the side of the seat so as to be capable of swinging freely.

3. The seatbelt apparatus according to Claim 2, wherein the holder (19) is fitted on the wire (14) at a portion of the protective cover (18) in the vicinity of a constricted portion (18a) of the accordion shape which is located on the fixed member side.

4. The seatbelt apparatus according to any one of Claims 1 to 3, wherein a tape (20) is wound around the holder (19) and the wire (14) so as to ride across the holder (19) and the wire (14) to fix the holder (19) to the wire (14).

## Patentansprüche

1. Sitzgurtvorrichtung, umfassend:
einen Sitzgurt (4) mit einer Zunge (9);
eine Gurtschlosseinrichtung (10) mit einem Gurtschlossabschnitt (12), der mit der Zunge (9) in Eingriff zu bringen ist, und mit einem Schalter (13a, 13b) zum Erfassen eines Eingriffs zwischen dem Gurtschlossabschnitt (12) und der Zunge (9);
einen Draht (14), der in zwei Teile gefaltet ist, so dass er eine Schleife ausbildet, zum Befestigen der Gurtschlosseinrichtung (10) an einer Fahrzeugkörperseite;
eine Schutzhülle (18), die an einer Außenrandseite des Drahts (14) vorgesehen ist, so dass der Draht (14) darin untergebracht ist; und
ein Signalkabel (17), das mit dem Schalter (13a, 13b) verbunden ist und das sich an einer Innenrandseite der Schutzhülle (18) erstreckt;
**dadurch gekennzeichnet,**
**dass** eine Halteeinrichtung (19) an der Innenrandseite der Schutzhülle (18) angeordnet und auf den Außenrand beider Teile des zu einer Schleife geformten Drahts (14) aufgepasst ist, um zu verhindern, dass die beiden Teile des Drahts (14) miteinander überkreuzt werden.

2. Sitzgurtvorrichtung nach Anspruch 1, wobei der Draht (14) an beiden Enden in einem Gehäuse (11) der Gurtschlosseinrichtung (10) befestigt ist, und ein gebogenes Ende (14a) von einem ortsfesten Element (8) an einer Seite eines Sitzes schwenkbar gestützt wird, und wobei die Schutzhülle (18) in einer Ziehharmonikaform ausgebildet ist, die das Gehäuse (11) an der Seite des Sitzes so stützen kann, dass es in der Lage ist, frei zu schwenken.

3. Sitzgurtvorrichtung nach Anspruch 2, wobei die Halteeinrichtung (19) auf den Draht (14) an einem Abschnitt der Schutzhülle (18) in der Umgebung eines verengten Abschnitts (18a) der Ziehharmonikaform aufgepasst ist, welcher an der Seite des ortsfesten Elements angeordnet ist.

4. Sitzgurtvorrichtung nach einem der Ansprüche 1 bis 3, wobei ein Band (20) um die Halteeinrichtung (19) und den Draht (14) gewickelt ist, so dass es über die Halteeinrichtung (19) und den Draht (14) verläuft, um die Halteeinrichtung (19) an de Draht (14) zu befestigen.

## Revendications

1. Un système de ceinture de sécurité comprenant :
une ceinture de sécurité (4) munie d'une languette (9) :
un dispositif de bouclage (10) présentant une partie de bouclage (12) destinée à venir en prise avec la languette (9) et un commutateur (3a, 13b) pour détecter la mise en prise de la partie de bouclage (12) et la languette (9) ;
un fil (14) plié en deux parties de manière à former une boucle pour fixer le dispositif de bouclage (10) à un côté d'une caisse de véhicule ;
un couvercle de protection (18) prévu sur un côté extérieur périphérique du fil (14) de manière à stocker le fil (14) ; et
un câble de signalisation (17) relié au commutateur (13a, 13b) et s'étendant sur un côté interne périphérique du couvercle de protection (18) ;
**caractérisé en ce que**
un support (19) est situé sur le côté interne périphérique du couvercle de protection (18) et adapté au niveau de la périphérie extérieure des deux brins du fil en boucle (14) de manière à empêcher les deux brins du fil (14) de s'entrecroiser mutuellement.

2. Le système de ceinture de sécurité selon la revendication 1, dans lequel le fil (14) est fixé aux deux extrémités à l'intérieur d'une enceinte (11) du dispositif de boucle (10), et une extrémité repliée (14a) du fil est supportée de façon pivotante au moyen d'un organe fixe (8) sur un côté d'un siège, et le couvercle de protection (18) est formé sous forme d'un accordéon qui peut supporter l'enceinte (11) sur le côté du siège, de manière à être capable de basculer librement.

3. Le système de ceinture de sécurité selon la revendication 2, dans lequel le support (19) est fixé sur le fil (14) au niveau d'une partie du couvercle de protection (18) à proximité d'une zone rétrécie (18a) de la forme en accordéon qui est située du côté de l'organe fixe.

4. Le système de ceinture de sécurité selon l'une quelconque des revendications 1 à 3, dans lequel une bande (20) est enroulée autour du support (19) et le fil (14) de manière à chevaucher le support (19) et le fil (14) pour fixer le support (19) au fil (14).
